# EUROPÄISCHE PATENTSCHRIFT

(11) **EP 2 985 492 B1**
(45) Veröffentlichungstag und Bekanntmachung des Hinweises auf die Patenterteilung: **04.10.2017**
(21) Anmeldenummer: 14002803.6
(22) Anmeldetag: 11.08.2014
(51) Int. Cl.: F16H 55/17, F16H 55/20, F16H 55/22

(54) **Kegelrad mit veränderter Geometrie**
Bevel gear with altered geometry
Roue conique à géométrie modifiée

(43) Veröffentlichungstag der Anmeldung: 17.02.2016
(73) Patentinhaber: Klingelnberg AG, 8050 Zürich (CH)
(72) Erfinder: Töpfer, Gary, D-42897 Remscheid (DE)
(74) Vertreter: Heusch, Christian

(56) Entgegenhaltungen:
- WO-A1-2005/057052
- DE-A1- 4 425 496
- US-A- 6 068 571

## Beschreibung

Die vorliegende Erfindung betrifft das Entgraten der Zahnkanten von Kegelrädern. Insbesondere betrifft die Erfindung Kegelräder mit entsprechend veränderter Geometrie und ein Verfahren zur Herstellung solcher Kegelräder, entsprechend dem Oberbegriff der Ansprüche 1 sowie 8, und wie sie aus der publizierten Anmeldung DE4425496A bekannt sind.

### Stand der Technik

Beim Fertigen von Kegelrädern entsteht, je nach verwendetem Werkzeug und verwendeter Technologie, durch die spanabhebende Bearbeitung am äußeren Zahnende ein Grat.

Bevor auf die Gratbildung und das Entgraten eingegangen wird, soll anhand einiger grundlegender Betrachtungen und anhand von Zeichnungen das entsprechende Umfeld genauer definiert werden.

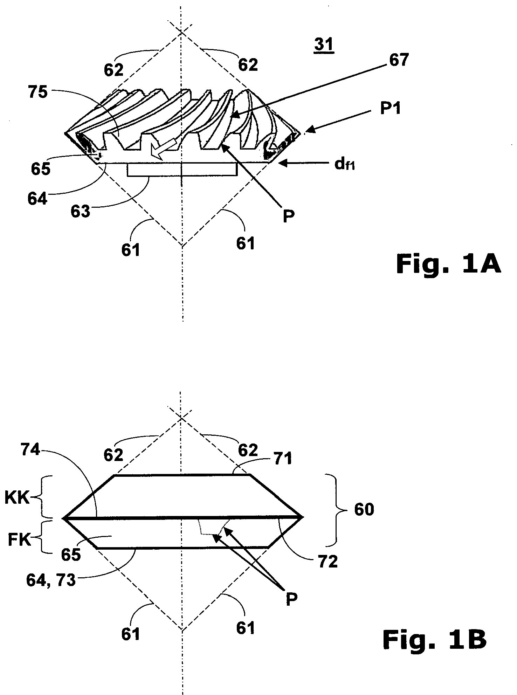

In Fig. 1A ist die schematische Seitenansicht eines Kegelradritzels 31 gezeigt, wobei anhand dieser Seitenansicht Elemente und Begriffe definiert werden, die im Rahmen der vorliegenden Anmeldung verwendet werden. In Fig. 1B ist in schematischer Form der Grundkörper 60 eines Kegelradritzels 31 nach Fig. 1A gezeigt. Es handelt sich bei dem gezeigten Beispiel um ein Kegelradritzel 31 mit gebogener Flankenlängslinie. Die Erfindung lässt sich aber auch auf andere Kegelräder 31 anwenden. Das Kegelradritzel 31 weist im gezeigten Beispiel einen Grundkörper 60 auf, der durch zwei Kegelstümpfe KK, FK mit entsprechenden Kegelmantelflächen definiert wird, wie in Fig. 1B gezeigt. Bei diesen Kegelmantelflächen handelt es sich, um genau zu sein, um Kegelstumpfmantelflächen. Die mit den Bezugszeichen 61 und 62 versehenen Kegelmantelflächen der entsprechenden Vollkegel werden als Rückenkegelfläche und als Kopfkegelfläche bezeichnet. Die Schnittlinien der Rückenkegelfläche mit der Zeichenebene sind durch die Hilfslinien 61 dargestellt. Die Schnittlinien der Kopfkegelfläche mit der Zeichenebene sind durch die Hilfslinien 62 dargestellt. Die beiden Kegelstümpfe KK, FK haben je eine Deckfläche 71, 73 und eine dazu parallel verlaufende Grundfläche 72, 74. Beide Kegelstümpfe KK, FK sind koaxial zur Werkstückrotationsachse R1 angeordnet, wobei die Grundfläche 72 des Kegelstumpfs KK die Grundfläche 74 des Kegelstumpfs FK berührt. Die beiden Kegelstümpfe KK, FK sind also im gezeigten Beispiel entgegengesetzt zu einander orientiert.

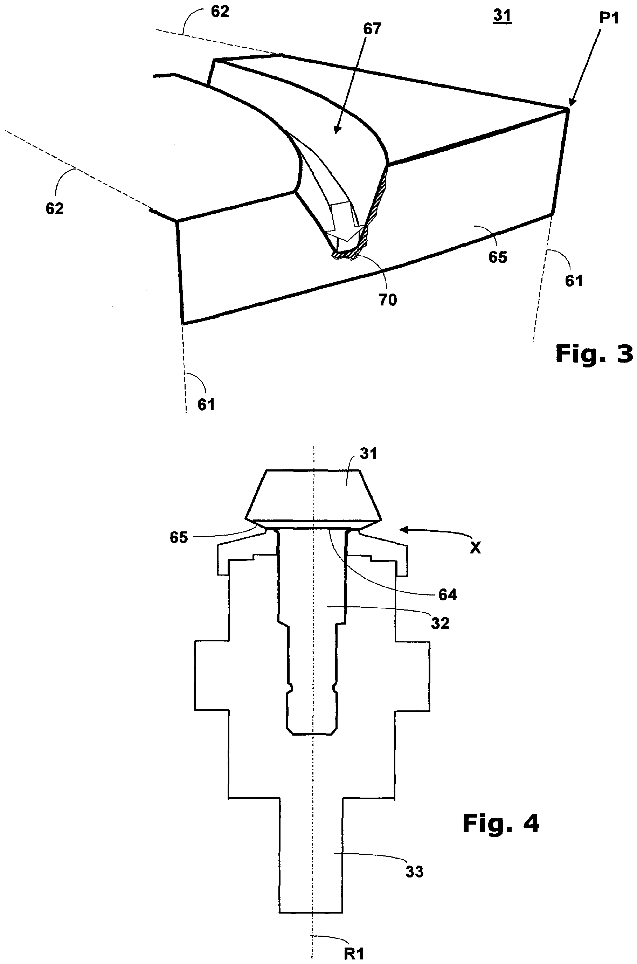

Die Zähne 75 des Kegelradritzels 31 verlaufen entlang der Kopfkegelstumpfmantelfläche. Die Bezugsstirnfläche des Kegelrads 31 wird mit 63 und die rückseitige Stirnfläche mit 64 bezeichnet. Die Stirnfläche 64 entspricht hier der Deckfläche 73 des Kegelstumpfs FK. Die in Fig. 1A grau dargestellte Kegelstumpfmantelfläche, die einen ringförmigen Teil der Rückenkegelfläche darstellt, wird hier allgemein als (ringförmige) fersenseitige Mantelfläche 65 bezeichnet. Im Übergangsbereich von den Zähnen 75 zu der fersenseitigen Mantelfläche 65 können bei der spanabhebenden Bearbeitung (hier als Verzahnen oder Verzahnungsbearbeitung bezeichnet) Grate 70 entstehen (siehe Fig. 3). Diese Grate bilden sich vor allem an den konkaven Zahnflanken der Zähne 75, respektive im Übergangsbereich der konkaven Zahnflanken zu der fersenseitigen Mantelfläche 65. Dieser Übergangsbereich ist in Fig. 1A mit P bezeichnet, wobei anzumerken ist, das Grate 70 sowohl an den Zahnflanken als auch am Zahnfuß vorkommen können. Ein Grat 70 entsteht meist nur an der Ferse (hier im Bereich P), wenn von innen nach außen gefräst wird, d.h. wenn ein Werkzeug durch die Zahnlücke 67 kommend im Bereich der fersenseitige Mantelfläche 65 aus dieser Zahnlücke 67 austritt. In Fig. 1A ist bei der in der Mitte gezeigten Zahnlücke ein Blockpfeil eingezeichnet, der die Schnittrichtung eines Werkzeugs beim Austreten aus dieser Zahnlücke 67 andeutet. In Fig. 1B ist im Bereich der Rückenkegelmantelfläche 65 durch einen gepunkteten Linienzug der Durchtritt einer Zahnlücke 67 durch diese Fläche 65 gezeigt.

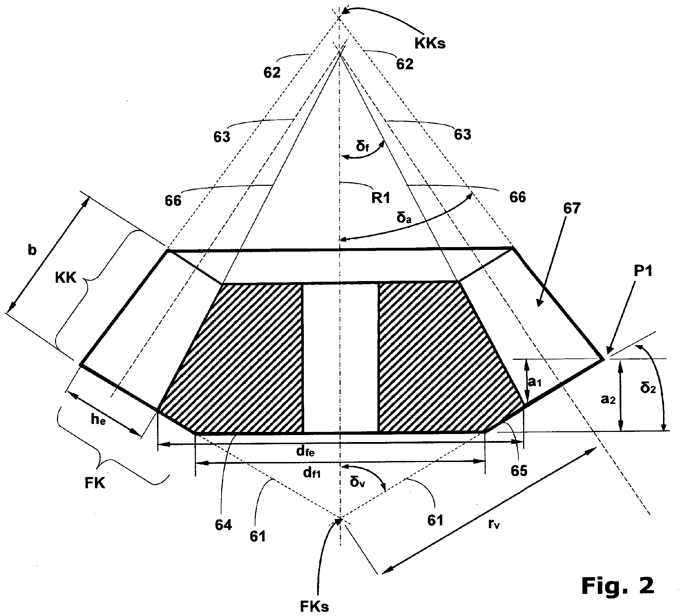

In Fig. 2 sind Details eines weiteren Kegelrads 31 gezeigt, wobei diese Abbildung aus der Norm DIN 3971, "Begriffe und Bestimmungsgrößen für Kegelräder und Kegelradpaar", Juli 1980, abgeleitet wurde. Im Folgenden werden die Begriffe dieser DIN-Norm verwendet, soweit erforderlich und sachdienlich. In Fig. 2 ist ein Axialschnitt gezeigt. Im Bereich des Kopfkegelstumpfs KK sind Hilfslinien eingezeichnet, die sich allesamt mit der Werkstück(rotations)achse R1 schneiden. Von außen nach innen betrachtet, sind im Bereich des Kopfkegels die folgenden Hilfslinien zu finden:
- 62: Schnittlinien (strichliert) der Kopfkegelmantelfläche mit der Zeichenebene;
- 63: Schnittlinien (strichliert) der Teilkegelmantelfläche mit der Zeichenebene;
- 66: Schnittlinien (durchgezogene Linien) der Fersenkegelmantelfläche mit der Zeichenebene.

Die Kopfkegelspitze ist mit KKs bezeichnet. Im gezeigten Beispiel verlaufen die genannten Schnittlinien 62, 63 und 66 nicht parallel zu einander, sondern sie sind je durch unterschiedliche Kegelwinkel definiert. Für die Erfindung ist der Fußkegelwinkel δ_{f} von besonderer Bedeutung. Dieser Winkel ist daher in Fig. 2 gezeigt. Im gezeigten Fall liegen die Spitzen des Kopfkegels KKs, des Teilkegels und des Fußkegels nicht im gleichen Punkt der Werkstückachse R1. Daher nimmt die Zahnhöhe h in Richtung der Zahnbreite b (ausgehend von der Kopfkegelspitze KKs) betrachtet zu. Die Zahnhöhe beim Durchtritt durch die fersenseitige Mantelfläche 65 wird mit hₑ bezeichnet (siehe Fig. 2). Die Zähne sind im gezeigten Fall am kleinen Durchmesser des Kegelrades (Zehe genannt) kleiner (im Sinne von weniger hoch) als am großen Durchmesser (Ferse genannt).

Im Bereich des Fersenkegels sind im gezeigten Beispiel auch Hilfslinien dargestellt. Es handelt sich hier um die Schnittlinien 61 (strichliert) der Fersenkegelmantelfläche mit der Zeichenebene. Diese Schnittlinien 61 schneiden sich mit der Werkstückachse R1 in der Fersenkegelspitze FKs. Für die Erfindung ist auch der Kegelwinkel δᵥ des Fußkegels von besonderer Bedeutung. Dieser Winkel ist daher auch in Fig. 2 gezeigt. Weiterhin wichtig sind die folgenden Winkel: Kopfkegelwinkel δₐ, Winkel der Fersenkante δ₂.

Die genannten Grate bilden sich hauptsächlich im Bereich der fersenseitigen Mantelfläche 65 aus. In Fig. 3 ist eine stark vereinfachte und vergrößerte Darstellung eines Kegelrads 31 gezeigt, das hier nur eine einzige Zahnlücke 67 aufweist. Das Kegelrad 31 der Fig. 3 hat einen sehr großen Fußkegelwinkel δ_{f} am Kopfkegel (hier beträgt δ_{f} ca. 80 Grad). Der Kegelwinkel δᵥ des Fersenkegels beträgt hier ca. 10 Grad. Diese Angaben und die entsprechenden Zeichnungen sind rein schematischer Natur und sind nur als Beispiele zu verstehen, die der besseren Illustration dienen sollen.

Der Durchtritt der Zahnlücke 67 durch die fersenseitige Mantelfläche 65 hat hier eine angenäherte U- bzw. V-Form. Eine Gratbildung kann im Bereich der seitlichen Schenkel der U-Form (vor allem an der konkaven Zahnflanke, die hier rechts im Bereich der Zahnlücke 67 liegt) und im Fußbereich der U-Form auftreten. Im Folgenden geht es insbesondere um die Gratbildung im Fußbereich. In Fig. 3 ist in vereinfachter Form ein Grat 70 (hier auch als fersenseitiger Grat bezeichnet) angedeutet (schraffiert dargestellt), der sich am im Fußbereich und entlang der konkaven Zahnflanke erstreckt. In der Zahnlücke 67 ist auch hier (wie in Fig. 1A) ein Blockpfeil dargestellt, der die Schnittrichtung eines Werkzeugs andeutet, das durch die Zahnlücke 67 bewegt wird und die Zahnlücke 67 im Bereich der fersenseitigen Mantelfläche 65 verlässt.

In der vorliegenden Erfindung geht es speziell um die fersenseitigen Grate 70 von Kegelrädern, da diese Grate 70 besonders aufwendig und schwierig zu entgraten sind.

Es wird als ein weiterer Nachteil angesehen, dass spezielle Fräser eingesetzt werden müssen, um fersenseitige Grate bei Kegelrädern zu entfernen.

Beim Herstellen von Kegelradritzeln ist das Entgraten speziell an der Fersenseite des Kegelradritzels besonders problematisch, da die rückseitige Stirnfläche mit 64 des Kegelradritzels 31 in einer konventionellen Verzahnungsmaschine häufig nur teilweise oder gar nicht zugänglich ist, wie man der schematischen Fig. 4 entnehmen kann.

In Fig. 4 ist in einer schematischen Schnittdarstellung eines Kegelrads 31 mit Welle 32 gezeigt. Die Welle 32 ist in einer Werkstückspindel 33 aufgenommen. Die fersenseitige Mantelfläche 65 ist im Bereich X nur schwer zugänglich, da zwischen der Mantelfläche 65 und der Werkstückspindel 33 wenig Platz vorhanden ist.

Das Entgraten im Fußbereich an der Fersenseite ist aus den genannten Gründen nur mit Aufwand möglich.

Der Erfindung liegt nun die Aufgabe zugrunde, eine Lösung für das Entgraten am Zahnfuß zu finden. Vor allem geht es um das Entgraten eines fersenseitigen Grats am Zahnfuß eines Kegelrads.

Diese Aufgaben werden erfindungsgemäß durch ein Kegelrad gelöst, das aufgrund seiner Formgebung die Ausbildung eines fersenseitigen Grats am Zahnfuß verhindert. Auf diesem Weg wird erreicht, dass sich gar kein Grat ausbilden kann, der dann aufwendig entfernt werden müsste. Die Erfindung setzt also nicht auf eine maschinelle Lösung, die mit technischem Aufwand das Entgraten am Zahnfuß ermöglichen soll, sondern die Erfindung geht einen komplett neuen Weg, indem das Problem durch geeignete Formgebung reduziert oder vermieden wird.

Die Erfindung basiert auf der Erkenntnis, dass sich ein Grat dann ausbildet, wenn die lokalen Schnittbedingungen zwischen Werkzeug und Werkstück ungünstig sind. Es hat sich gezeigt, dass sich ein Grat vor allem an denjenigen Kanten ausbildet, die einen Austrittswinkel haben, der kleiner ist als 120 Grad. Der Austrittswinkel hat einen Einfluss darauf, ob beim Bearbeiten ein Verformen des Metalls des Werkstücks stattfindet, oder ob ein echter Schneidvorgang die Bildung eines Grates verhindert. Beim Zerspanungsvorgang des Verzahnens dringt die Schneide eines Werkzeugs in den Metallwerkstoff ein, der dadurch elastisch und plastisch verformt wird. Nach Überschreiten eines Grenzwertes beginnt der Werkstoff zu fließen. In Abhängigkeit von der Schneidengeometrie bildet sich der verformte Werkstoff zu einem Span aus, der über die Spanfläche am Werkzeug abläuft. Bei einem Austrittswinkel aus einer Zahnlücke, der grösser ist als 120 Grad, können die am Zahnfuß entstehenden Späne sauber abgetrennt werden. Ist der Austrittswinkel kleiner ist als 120 Grad, so bilden sich durch die plastische Verformung Grate.

Ein Kegelrad der Erfindung zeichnet sich durch einen speziell geformten Grundkörper aus, der sich aus einem Kopfkegelstumpf und einem Fersenkegelstumpf ergibt, die beide konzentrisch zu einer Werkstück(rotations)achse angeordnet und entgegengesetzt zueinander orientiert sind. Der Kopfkegelstumpf hat eine ringförmige Kopfkegelmantelfläche (Kopfkegelstumpfmantelfläche) und der Fersenkegelstumpf hat eine ringförmige Fersenkegelmantelfläche (Fersenkegelstumpfmantelfläche). Der Kopfkegelstumpf ist durch einen Kopfkegelwinkel definiert, der zwischen 0 Grad und 90 Grad beträgt. Der Fersenkegelstumpf ist durch einen Fersenkegelwinkel definiert, der zwischen 0 Grad und 90 Grad beträgt. Das Kegelrad weist im Bereich der Kopfkegelstumpfmantelfläche mindestens eine Zahnlücke auf, welche die Fersenkegelstumpfmantelfläche durchdringt. D.h. die Zahnlücke tritt im Bereich der Fersenkegelstumpfmantelfläche aus dem Material des Werkstücks aus. Diese Zahnlücke weist einen Zahnfuß auf, dessen Verlauf durch einen Fußkegelwinkel definiert ist.

Gemäß Erfindung ist am Fersenkegelstumpf des Werkstücks eine umlaufende Ringstruktur vorgesehen, die in Bezug auf die in Richtung der Werkstück(rotations)achse spitz zulaufende Fersenkegelmantelfläche erhaben ist. Diese Ringstruktur definiert einen fersenseitigen Austrittswinkel am Zahnfuß, der gemäß Erfindung vorzugsweise bei allen Ausführungsformen im Bereich zwischen 125 Grad und 160 Grad liegt.

Besonders vorzugsweise liegt der fersenseitige Austrittswinkel am Zahnfuß bei allen Ausführungsformen im Bereich zwischen 135 Grad und 150 Grad, wobei bei diesen Bereichsangaben jeweils die Grenzen mit einbezogen sein sollen.

Das Kegelrad der Erfindung hat vorzugsweise bei allen Ausführungsformen eine umlaufende Ringstruktur, die mindestens eine erste Ringfläche und eine zweite Ringfläche umfasst, wobei die Ringstruktur in einem Axialschnitt (durch den Grundkörper des Werkstücks) betrachtet eine Dreiecksform oder eine Trapezform hat. Das Kegelrad der Erfindung kann aber auch bei allen Ausführungsformen eine umlaufende Ringstruktur aufweisen, die eine kantenfreie Konstellation aufweist und die in einem Axialschnitt durch das Kegelrad eine konvexe Form hat.

Das Kegelrad der Erfindung hat vorzugsweise bei allen Ausführungsformen eine umlaufende Ringstruktur mit dem Austrittswinkel im fersenseitigen Austrittbereich der Zahnlücke, die einen effektiven Fersenkegelwinkel vorgibt, der grösser ist als der Fersenkegelwinkel des Fersenkegelstumpfs des Grundkörpers.

Das Vorgeben einer umlaufenden Ringstruktur am fersenseitigen Kegelstumpf hat den Vorteil, dass beim Verzahnen kein Grat am Zahnfuß auf der Fersenseite entsteht. Das Anbringen einer umlaufenden Ringstruktur ist möglich, da der fersenseitige Kegelstumpf im eigentlichen Sinne keine Funktion hat.

Wichtig ist bei allen Ausführungsformen der Erfindung der Winkel zwischen der Schneidkante des Werkzeugs (respektive dem Schnittgeschwindigkeitsvektor des Werkzeugs) und dem Material des Werkstücks. Im Zahnfuß geht es also um den Winkel zwischen der Bewegung der Kopfschneide des Werkzeugs (die Bewegungsrichtung entspricht in etwa dem Fußkegel) und dem Außenrand des Ergänzungskegels.

Die umlaufende Ringstruktur wird bei allen Ausführungsformen im Bereich der äußeren (fersenseitigen) Zahnenden vorgesehen.

Der Rohling eines solchen Zahnrades wird üblicherweise in einer Drehbank oder -maschine vorbearbeitet, bevor er dann einer Verzahnungsbearbeitung unterzogen wird. Daher wurde eine rotationssymmetrisch umlaufende Ringstruktur gewählt, die problemlos bei der Drehbearbeitung des Rohlings hergestellt werden kann.

Gemäß Erfindung wird vorzugsweise im Rahmen einer Drehbearbeitung ein Rohling bereitgestellt, der bereits mit einer umlaufenden Ringstruktur am fersenseitigen Kegelstumpf versehen ist.

### ZEICHNUNGEN

Ausführungsbeispiele der Erfindung werden im Folgenden unter Bezugnahme auf die Zeichnungen näher beschrieben.
- **FIG. 1A**: zeigt eine schematische Seitenansicht eines Kegelradritzels;
- **FIG. 1A**: zeigt eine schematische Seitenansicht des Grundkörpers des Kegelradritzels der Fig. 1A, wobei der Austritt einer einzelnen Zahnlücke im Bereich der Ferse angedeutet ist;
- **FIG. 2**: zeigt eine schematische Schnittansicht (Axialschnitt) eines weiteren Kegelradritzels, das zur Definition verschiedener Begriffe dient;
- **FIG. 3**: zeigt eine schematische Perspektivansicht eines Teils eines weiteren Kegelrads, das hier nur eine Zahnlücke aufweist, wobei sich beim Verzahnen im Fußbereich an der Ferse und an der konkaven Zahnflanke ein Grat gebildet hat;
- **FIG. 4**: zeigt eine schematische Schnittansicht durch eine Spannvorrichtung mit einem eingespannten Kegelradritzel;
- **FIG. 5**: zeigt eine schematische Perspektivansicht eines Teils eines ersten erfindungsgemäßen Kegelrads, das hier nur eine Zahnlücke aufweist, wobei das Kegelrad eine umlaufende Ringstruktur auf der Ferse umfasst;
- **FIG. 6A**: zeigt eine schematische Schnittansicht eines Teils eines weiteren Kegelradritzels der Erfindung, wobei im Schnitt Details einer beispielhaften umlaufenden Ringstruktur zu erkennen sind;
- **FIG. 6B**: zeigt einen vergrösserten Ausschnitt der Fig. 6A;
- **FIG. 7**: zeigt eine schematische Seitenansicht eines weiteren Kegelrads der Erfindung mit umlaufender Ringstruktur, wobei eine einzelne Zahnlücke angedeutet ist;
- **FIG. 8**: zeigt eine schematische Seitenansicht eines weiteren Kegelrads der Erfindung mit umlaufender Ringstruktur, wobei zwei Zähne und eine Zahnlücke gezeigt sind;
- **FIG. 9**: zeigt ein schematisches Flussdiagram mit den Schritten eines beispielhaften erfindungsgemäßen Verfahrens.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Die Erfindung lässt sich generell auf Kegelräder 31 anwenden, wobei im vorliegenden Zusammenhang auch Kronenräder mit eingeschlossen sein sollen. Bei einem Kronenrad ist die Verzahnung auf der kreisförmigen Stirnfläche eines Zylinders angebracht.

Die Erfindung lässt sich auf Kegelräder 31 mit konstanter und veränderlicher Zahnhöhe h anwenden. Die Erfindung lässt sich auf Kegelräder 31 unabhängig vom Verlauf der Flankenlängslinie anwenden. Die Erfindung lässt sich also auf geradverzahnte Kegelräder 31, schrägverzahnte Kegelräder 31 und auch auf spiralverzahnte Kegelräder 31 anwenden.

Die Form eines Kegelrads 31 ist durch verschiedene Vorgaben definiert. Unter anderem gehören dazu das angestrebte Übersetzungsverhältnis, das Modul, die Tragfähigkeit und die Überdeckung. Zusätzlich spielen aber auch die Steifigkeit bzw. Durchbiegung, die Lagerung und das Einbaumaß im eingebauten Zustand eine Rolle. Neben der Makrogeometrie der eigentlichen Verzahnung der Kegelräder, spielt die Form des Grundkörpers (Grundgeometrie) insbesondere in Sachen Durchbiegung, Lagerung und Produzierbarkeit eine Rolle.

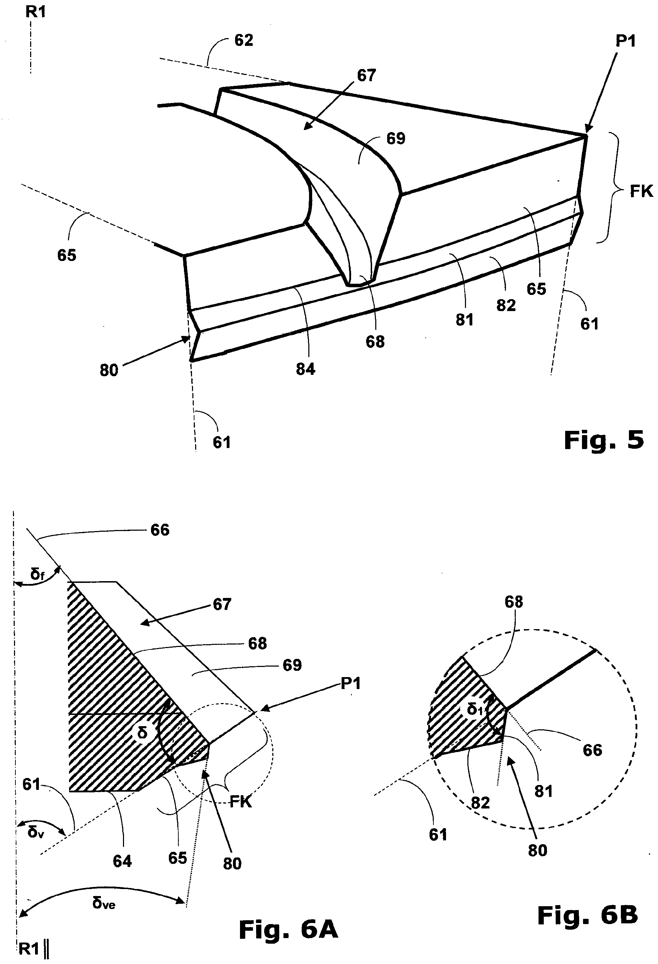

In Fig. 5 ist ein erstes Kegelrad 31 der Erfindung in einer stark schematisierten Ansicht gezeigt. Das Kegelrad 31 umfasst einen Grundkörper, der sich aus einem Kopfkegelstumpf KK und einem Fersenkegelstumpf FK ergibt (wie z.B. in Fig. 1B in der Seitenansicht oder in Fig. 2 im Axialschnitt gezeigt). Der Kopfkegelstumpf KK und der Fersenkegelstumpf FK sind konzentrisch zu der Werkstückrotationsachse R1 angeordnet. Der Kopfkegelstumpf KK weist eine ringförmige Kopfkegelstumpfmantelfläche auf und der Fersenkegelstumpf FK weist eine ringförmige Fersenkegelstumpfmantelfläche auf. Diese ringförmige Fersenkegelstumpfmantelfläche wird hier als fersenseitige Mantelfläche 65 bezeichnet. In Fig. 5 erstreckt sich der Kopfkegelstumpf KK links von dem Punkt P1 und der Fersenkegelstumpf FK liegt unterhalb des Punktes P1.

Der Kopfkegelstumpf KK ist durch einen Kopfkegelwinkel δₐ in Bezug auf die Werkstückrotationsachse R1 definiert und der Fersenkegelstumpf FK ist durch einen Fersenkegelwinkel δᵥ in Bezug auf die Werkstückrotationsachse R1 definiert, wie in der erwähnten DIN-Norm vorgegeben und wie in Fig. 2 gezeigt.

Der Kopfkegelwinkel δₐ liegt bei einem Kegelrad zwischen 0 Grad und 90 Grad und der Fersenkegelwinkel δᵥ liegt zwischen 0 Grad und 90 Grad. Hier ist zu erwähnen, dass der Fersenkegelstumpf FK bei einem Fersenkegelwinkel von 0° zu einem Zylinder und bei 90° zu einer ebenen Ring- oder Kreisfläche "mutiert". Die Erfindung ist auch für diese Sonderfälle anwendbar. Daher ist, wo erforderlich, von einer ringförmigen Mantelfläche 65 die Rede. Diese ringförmige Mantelfläche 65 liegt konzentrisch zur Werkstückrotationsachse R1. Die ringförmige Mantelfläche 65 kann bei allen Ausführungsformen Teil einer Zylindermantelfläche oder Teil der erwähnten Fersenkegelmantelfläche sein.

Weiterhin weist das Kegelrad 31 im Bereich der Kopfkegelstumpfmantelfläche mindestens eine Zahnlücke 67 auf, wie in Fig. 5 gezeigt. Diese Zahnlücke 67 durchdringt die Fußkegelmantelfläche 65, respektive die Zahnlücke 67 tritt im Bereich der Fußkegelmantelfläche 65 aus dem Material des Grundkörpers des Kegelrads 31 aus. Die Zahnlücke 67 hat einen Zahnfuß 68, dessen Verlauf durch den Fußkegelwinkel δ_{f} in Bezug auf die Werkstückrotationsachse R1 definiert ist (siehe Fig. 2). Der Fußkegelwinkel δ_{f} kann mit dem Kopfkegelwinkel δₐ identisch sein (falls die Zahnlücke 67 eine konstante Zahnhöhe h hat). In Fig. 2 gilt jedoch δ_{f} ≠ δₐ mit δ_{f} < δₐ.

Gemäß Erfindung weist das Kegelrad 31 in jeder Ausführungsform an dem Fersenkegelstumpf FK eine umlaufende Ringstruktur 80 auf, die in Bezug auf die Fersenkegelmantelfläche 65 erhaben ist. In Fig. 5 ist ein erstes Beispiel einer umlaufenden Ringstruktur 80 gezeigt. Die umlaufende Ringstruktur 80 definiert einen fersenseitigen Austrittswinkel δ₁, der im Winkelbereich zwischen 125 Grad und 160 Grad liegt.

Im Folgenden wird auf die Figuren 6A und 6B verwiesen, um Details der Erfindung genauer erläutern zu können. In Fig. 6A ist ein Ausschnitt eines Axialschnitts durch ein weiteres Kegelrad 31 der Erfindung gezeigt. Rechts ist in Fig. 6A der Blick auf eine rechte Zahnflanke 69 eines Zahnes gezeigt. Die Zahnlücke 67 liegt im gezeigten Anblick vor der Zahnflanke 69. Fig. 6B ist ein vergrößerter Ausschnitt der Fig. 6A. Anhand einer gestrichelten Hilfslinie 61 ist die Schnittlinie der Fersenkegelmantelfläche 65 mit der Zeichenebene dargestellt. Die Hilfslinie 66 ist die Schnittlinie des Fußkegels mit der Zeichenebene. Durch das Bezugszeichen R1∥ ist eine Parallele zur Werkstückachse R1 dargestellt.

Im Bereich der fersenseitigen Mantelfläche 65 ist die umlaufende Ringstruktur 80 angeordnet, die im gezeigten Schnitt eine beispielhafte Dreiecksform hat. In der vergrößerten Darstellung der Fig. 6B ist zu erkennen, dass die Ringstruktur 80 unmittelbar im Bereich der Zahnfußes 68 ansetzt. Hier hat die Ringstruktur 80 im Axialschnitt eine Dreiecksform mit zwei Ringflächen 81 und 82, wenn man den dreidimensionalen Grundkörper des Kegelrads 31 betrachtet. Aus dem Fußkegelwinkel δ_{f} und dem Rückenkegelwinkel δᵥ kann man den Austrittswinkel 5 (siehe Fig. 6A) wie folgt ermitteln: 5 = 180 - δ_{f} - δᵥ

Die erste Ringfläche 81 definiert nun einen effektiven Fersenkegelwinkel δᵥₑ, wie in Fig. 6A gezeigt. Dadurch, dass der Fersenkegelwinkel δᵥₑ kleiner ist als der Rückenkegelwinkel δᵥ, ergibt sich ein fersenseitiger Austrittswinkel δ₁, der grösser ist als der Austrittswinkel δ bei bisherigen Kegelrädern. Diesen Aspekt der Erfindung kann man besonders deutlich aus der Fig. 6B entnehmen.

Dieser Austrittswinkel δ₁ liegt, wie bereits erwähnt, bei allen Ausführungsformen vorzugsweise im Winkelbereich zwischen 125 Grad und 160 Grad. Durch das Vorgeben eines gegenüber konventionellen Kegelrädern vergrößerten Austrittswinkels δ, wird beim Verzahnen die Bildung eines fersenseitigen Grats 70 verhindert.

Die Geometrie des Fersenkegelstumpfs FK ist nicht nach Belieben wählbar. Unter anderem ist für das problemlose Wälzen eines Kegelradritzels mit einem Tellerrad wichtig, dass auf der Fersenseite am Kegelradritzel die Zähne des Tellerrads ohne Kollision mit den Zahnlücken des Kegelradritzels kämmen können. Die Lage und Form des Fersenkegelstumpfes muss daher so gewählt sein, dass ein Abstand zwischen Zahnfuß und Zahnkopf des Gegenrades, das sogenannte Kopf-Grund-Spiel besteht. Dieses sollte nach Möglichkeit in etwa konstant über die Zahnbreite sein. Auch besitzen Zähne zur Verringerung der Spannungskonzentration im Zahnfuß eine sogenannte Fußausrundung, auch zwischen dieser und der Kopfkante des Gegenrades darf unter den verschieden Betriebsbedingungen kein Kontakt auftreten. Jedoch darf der Abstand nicht zu groß sein, um eine unnötige Erhöhung der Zahnfußspannungen, durch einen größer Hebelarm der Kraft am Zahneingriff und dem Zahnfuß, zu vermeiden.

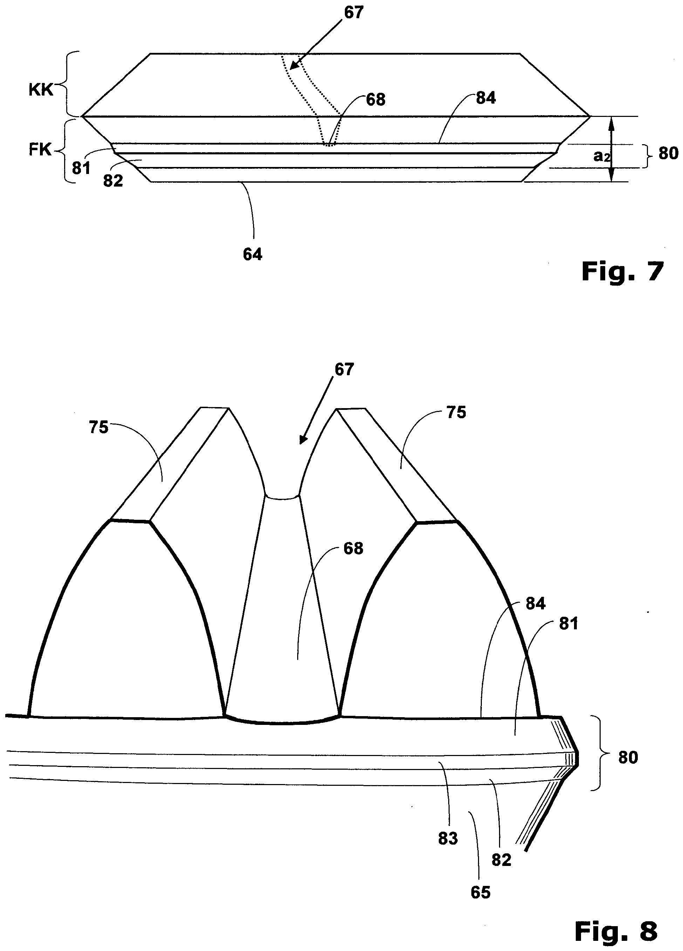

Die Ringstruktur 80 kann bei allen Ausführungsformen in einem Axialschnitt betrachtet auch eine Trapezform haben, wie in Fig. 8 gezeigt. Eine Ringstruktur 80 in Trapezform kann sich beispielweise aus drei Ringflächen 81, 82 und 83 zusammensetzen.

Durch die umlaufende Ringstruktur 80 der Erfindung ergibt sich bei allen Ausführungsformen im fersenseitigen Austrittbereich der Zahnlücke 67 lokal ein effektiver Fersenkegelwinkel δᵥₑ, der kleiner ist als der Fersenkegelwinkel δᵥ des Fersenkegelstumpfs FK.

Die Erfindung lässt sich auf Kegelräder 31 anwenden, die am Fersenkegelstumpf FK einen Abstand a₂ der äußeren Kopfkegelkante P1 zur Einbaufläche 64 aufweisen, der so gross ist, dass der Zahnfuß 68 im Bereich der schrägen Mantelfläche (hier auch fersenseitige Mantelfläche 65 genannt) des Fersenkegelstumpfs FK austritt. Anders ausgedrückt kann konstatiert werden, dass der axiale Anteil a₁ der fersenseitigen Zahnhöhe hₑ kleiner sein muss als der Abstand a₂, wie in Fig. 2 gezeigt.

Die umlaufende Ringstruktur 80 der Erfindung weist eine obere kreisförmige Kante 84 auf, die am Austritt des Zahnfußes 68 durch die Mantelfläche 65 liegt. In Fig. 5 liegt diese kreisförmige Kante 84 ein kleines Stück oberhalb des Austritts des Zahnfußes 68 durch die Mantelfläche 65. In Fig. 7 und in Fig. 8 liegt die kreisförmige Kante 84 jeweils am Austritt des Zahnfußes 68. Bei der Positionierung der umlaufenden Ringstruktur 80 sind die Fertigungstoleranzen zu berücksichtigen, damit in jedem Fall der Austritt des Zahnfußes 68 durch die Mantelfläche 65 in der umlaufenden Ringstruktur 80 liegt.

Kegelräder 31 der Erfindung haben eine umlaufende Ringstruktur 80, die eine erste Ringfläche 81 umfasst, die Teil eines weiteren Kegelstumpfs bildet. Dieser weitere Kegelstumpf ist konzentrisch zu der Werkstückrotationsachse R1 angeordnet und er hat einen effektiven Fersenkegelwinkel δᵥₑ, der kleiner ist als der Fersenkegelwinkel δᵥ.

Fig. 7 zeigt eine schematische Seitenansicht eines weiteren Kegelrads 31 der Erfindung mit umlaufender Ringstruktur 80. Es ist der Verlauf einer Zahnlücke 67 gezeigt, die sich im Bereich der Kopfkegelstumpfmantelfläche des Kopfkegels KK erstreckt. Dort wo der Zahnfuß 68 der Zahnlücke 67 die Fersenkegelstumpfmantelfläche des Fersenkegelstumpfs FK durchdringt, sitzt am Fersenkegelstumpf FK die Ringstruktur 80. Fig. 7 zeigt eine Ausführungsform, bei der die Ringstruktur 80 wiederum durch ein Dreieck angenähert werden kann. Zwei Ringflächen 81, 82 des entsprechenden Dreiecks sind in Fig. 7 sichtbar.

Fig. 8 zeigt eine schematische Seitenansicht eines Teils eines weiteren Kegelrads 31 der Erfindung mit umlaufender Ringstruktur 80. Es ist der Verlauf einer Zahnlücke 67 gezeigt, die seitlich von zwei Zähnen 75 begrenzt/definiert ist. Die Zahnlücke 67 erstreckt sich im Bereich der Kopfkegelstumpfmantelfläche des Kopfkegels KK. Dort wo der Zahnfuß 68 der Zahnlücke 67 die Fersenkegelstumpfmantelfläche des Fersenkegelstumpfs FK durchdringt, sitzt am Fersenkegelstumpf FK die Ringstruktur 80. Fig. 8 zeigt eine Ausführungsform, bei der die Ringstruktur 80 durch ein Trapez angenähert werden kann. Drei Ringflächen 81, 82, 83 des entsprechenden Trapezes sind in Fig. 8 sichtbar. Rechts sind in Fig. 8 andeutungsweise Schraffierungen der Flächen angebracht, um die Lage dieser Flächen besser hervor zu heben.

Vorzugsweise ist die Ringstruktur 80 bei allen Ausführungsformen so am Fersenkegelstumpf FK angeordnet und so dimensioniert, dass sich der Abstand a₂ gegenüber einem entsprechenden konventionellen Kegelrad nicht verändert. Damit bleibt die Einbauposition gleich und es wird beim Verzahnen trotzdem das Bilden von fersenseitigen Graten 70 am Zahnfuß 68 verhindert.

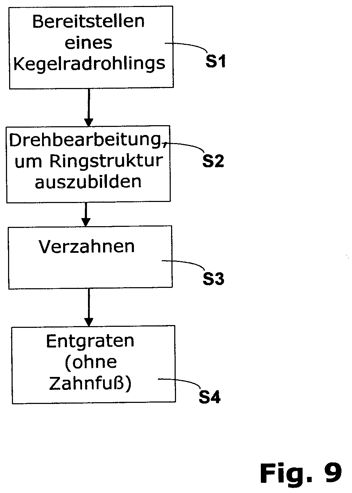

Fig. 9 zeigt ein schematisiertes Flussdiagramm eines beispielhaften Herstellverfahrens der Erfindung. In einem ersten Schritt S1 wird ein Rohling bereitgestellt, der zum Herstellen eines Kegelrades 31 geeignet ist. Ein solcher Rohling kann beispielsweise die Form des Grundkörpers 60 der Fig. 1B haben. Dieser Rohling wird nun im Schritt S2 einer Drehbearbeitung unterzogen, wie dies bei Kegelrädern üblich ist. Dabei können zum Beispiel die Stirnflächen plan gedreht werden. Zusätzlich wird durch eine Drehbearbeitung die Ringstruktur 80 erzeugt. Die Position dieser Ringstruktur kann rechnerisch ermittelt werden, nachdem das Kegelrad 31 ausgelegt wurde. Damit für das Ausbilden der Ringstruktur 80 mittels Drehbearbeitung genügend Material am Rohling vorhanden ist, wird ein entsprechend vergrösserter oder anders dimensionierter Fersenkegel FK vorgegeben.

Nachdem die Ringstruktur 80 erzeugt oder herausgearbeitet wurde, folgt nach einem bekannten Verfahren das Verzahnen S3 (das Herstellen der Zahnlücken). Dabei können sich Grate auf der Fersenseite (d.h. im Bereich des Fersenkegelstumpfes) bilden, wobei die Grate gemäss Erfindung nur an den Austrittskanten der Zahnflanken bilden können. Am Zahnfuß tritt keine Gratbildung auf. Im nachfolgenden Schritt kann in der Verzahnungsmaschine oder in einer anderen Maschine das Entgraten S4 durchgeführt werden, wobei hier keine fersenseitigen Grate 70 zu entgraten sind. Das Entgraten S4 ist daher weniger zeit- und kostenaufwendig als bei konventionellen Kegelrädern.

**Bezugszeichen:**

| | |
|---|---|
| Kegelrad | 31 |
| Welle | 32 |
| Werkstückspindel | 33 |
| | |
| Grundkörper | 60 |
| Rückenkegel | 61 |
| Kopfkegel | 62 |
| Teilkegel | 63 |
| Einbaufläche / Stirnfläche / Ferse | 64 |
| fersenseitige Rückenfläche / ringförmige Mantelfläche | 65 |
| Fußkegel | 66 |
| Zahnlücke | 67 |
| Zahnfuß | 68 |
| Zahnflanke | 69 |
| Grat | 70 |
| Deckfläche von KK | 71 |
| Grundfläche von KK | 72 |
| Deckfläche von FK | 73 |
| Grundfläche von FK | 74 |
| Zähne | 75 |
| umlaufende Ringstruktur | 80 |
| erste Ringfläche | 81 |
| zweite Ringfläche | 82 |
| dritte Ringfläche | 83 |
| obere kreisförmige Kante | 84 |
| | |
| axialer Anteil der fersenseitigen Zahnhöhe | a₁ |
| Abstand äußere Kopfkegelkante zur Einbaufläche | a₂ |
| Zahnbreite | b |
| Fußkreisdurchmesser | d_{fe} |
| erster Fußkreisdurchmesser | d_{f1} |
| Kopfkegelwinkel | δₐ |
| Fußkegelwinkel | δ_{f} |
| Fersenkegelwinkel / Rückenkegelwinkel | δᵥ |
| effektiver Fersenkegelwinkel | δᵥₑ |
| Austrittswinkel (ohne Ringstruktur 80) | δ |
| Austrittswinkel | δ₁ |
| Winkel der Fersenkante | δ₂ |
| Fersenkegelstumpf | FK |
| Fersenkegelspitze | FK_{S} |
| Zahnhöhe | h |
| Fersenseitige Zahnhöhe | hₑ |
| Kopfkegelstumpf | KK |
| Kopfkegelspitze | KK_{S} |
| Werkstückachse | R1 |
| Parallele zur Werkstückachse | R1∥ |
| Übergangsbereich | P |
| äußere Kopfkegelkante | P1 |
| Rückenkegellänge / Fersenkegellänge | rᵥ |
| Verfahrensschritte | S1, S2, S3, S4 |
| kritischer Bereich | X |

## Patentansprüche

1. Kegelrad (31) mit einem Grundkörper (60), der eine fersenseitige, ringförmige Mantelfläche (65) umfasst, die konzentrisch zu einer Werkstückrotationsachse (R1) des Kegelrads (31) angeordnet ist, wobei
• das Kegelrad (31) mindestens eine Zahnlücke (67) aufweist, welche im Bereich der Mantelfläche (65) aus dem Grundkörper (60) austritt,
• und wobei die Zahnlücke (67) einen Zahnfuß (68) aufweist, dessen Verlauf durch einen Fußkegelwinkel (δ_{f}) in Bezug auf die Werkstückrotationsachse (R1) definiert ist,
**dadurch gekennzeichnet, dass** an der Mantelfläche (65) eine konzentrisch umlaufende Ringstruktur (80) vorgesehen ist, die in Bezug auf die Mantelfläche (65) erhaben ist, und die einen fersenseitigen Austrittswinkel (δ₁) zwischen dem Zahnfuß (68) und der Ringstruktur (80) ergibt, der im Bereich zwischen 125 Grad und 160 Grad liegt, vorzugsweise im Bereich zwischen 135 Grad und 150 Grad.

2. Kegelrad (31) nach Anspruch 1, **dadurch gekennzeichnet, dass** die umlaufende Ringstruktur (80)
- mindestens eine erste Ringfläche (81) und eine zweite Ringfläche (82) umfasst und die Ringstruktur (80) in einem Axialschnitt durch das Kegelrad (31) eine Dreiecksform hat, oder
- mindestens eine erste Ringfläche (81), eine zweite Ringfläche (82) und eine dritte Ringfläche (83) umfasst und die Ringstruktur (80) in einem Axialschnitt durch das Kegelrad (31) eine Trapezform hat, oder
- eine kantenfreie Konstellation aufweist und in einem Axialschnitt durch das Kegelrad (31) eine konvexe Form hat.

3. Kegelrad (31) nach Anspruch 1, **dadurch gekennzeichnet, dass** durch die umlaufende Ringstruktur (80) mit dem Austrittswinkel (δ₁) in einem fersenseitigen Austrittbereich der Zahnlücke (67) ein effektiver Fersenkegelwinkel (δᵥₑ) vorgegeben ist, der kleiner ist als der Fersenkegelwinkel (δᵥ) des Fersenkegelstumpfs (FK).

4. Kegelrad (31) nach Anspruch 1, **dadurch gekennzeichnet, dass** die umlaufende Ringstruktur (80) eine erste Ringfläche (81) umfasst, die Teil eines Kegelstumpfs ist, der konzentrisch zu der Werkstückrotationsachse (R1) angeordnet ist und der einen effektiven Fersenkegelwinkel (δᵥₑ) aufweist, der kleiner ist als der Fersenkegelwinkel (δᵥ).

5. Kegelrad (31) nach einem der vorausgehenden Ansprüche, **dadurch gekennzeichnet, dass** die fersenseitige, ringförmige Mantelfläche (65) Teil einer Fersenkegelstumpfmantelfläche eines Fersenkegelstumpfs (FK) ist.

6. Kegelrad (31) nach Anspruch 5, **dadurch gekennzeichnet, dass** das Kegelrad (31) zusätzlich zu dem Fersenkegelstumpf (FK) mindestens einen Kopfkegelstumpf (KK) umfasst, der konzentrisch zu der Werkstückrotationsachse (R1) angeordnet ist, wobei
- der Kopfkegelstumpf (KK) eine ringförmige Kopfkegelstumpfmantelfläche aufweist,
- der Kopfkegelstumpf (KK) durch einen Kopfkegelwinkel (δₐ) in Bezug auf die Werkstückrotationsachse (R1) definiert ist, der zwischen 0 Grad und 90 Grad beträgt,
- der Fersenkegelstumpf (FK) durch einen Fersenkegelwinkel (δᵥ) in Bezug auf die Werkstückrotationsachse (R1) definiert ist, der zwischen 0 Grad und 90 Grad beträgt.

7. Kegelrad (31) nach Anspruch 5, **dadurch gekennzeichnet, dass** der Fersenkegelstumpf (FK) durch einen Fersenkegelwinkel (δᵥ) in Bezug auf die Werkstückrotationsachse (R1) definiert ist, der zwischen 0 Grad und 90 Grad beträgt.

8. Verfahren zum Herstellen eines Kegelrads (31) nach einem der Ansprüche 1 bis 7, **dadurch gekennzeichnet, dass** das Verfahren die folgenden Schritte umfasst:
- Bereitstellen (S1) eines Kegelradrohlings,
- Durchführen einer Drehbearbeitung (S2) des Kegelradrohlings, wobei im Rahmen dieser Drehbearbeitung (S2) eine umlaufende Ringstruktur (80) ausgebildet wird, die konzentrisch zu der Werkstückrotationsachse (R1) des Kegelrads (31) angeordnet ist,
- Durchführen einer Verzahnungsbearbeitung des Kegelradrohlings, um mindestens eine Zahnlücke (67) am Kegelrad (31) auszubilden.

9. Verfahren nach Anspruch 8, **dadurch gekennzeichnet, dass** eine Entgratbearbeitung des Kegelrads (31) durchgeführt wird, wobei keine Entgratbearbeitung am Zahnfuß (68) im Bereich der fersenseitigen Mantelfläche (65) durchgeführt wird.

## Claims

1. A bevel gear (31) having a main body (60), which comprises a heel-side, ring-shaped skin surface (65), which is arranged concentrically in relation to a workpiece axis of rotation (R1) of the bevel gear (31), wherein
• the bevel gear (31) has at least one tooth gap (67), which exits from the main body (60) in the region of the skin surface (65),
• and wherein the tooth gap (67) has a tooth base (68), the profile of which is defined by a base cone angle (δ_{f}) in relation to the workpiece axis of rotation (R1),
**characterized in that** a concentric circumferential ring structure (80) is provided on the skin surface (65), which is raised in relation to the skin surface (65), and which results in a heel-side exit angle (δ₁) between the tooth base (68) and the ring structure (80), which is in the range between 125° and 160°, preferably in the range between 135° and 150°.

2. The bevel gear (31) according to claim 1, **characterized in that** the circumferential ring structure (80)
- comprises at least a first ring surface (81) and a second ring surface (82) and the ring structure (80) has a triangular shape in an axial section through the bevel gear (31), or
- comprises at least a first ring surface (81), a second ring surface (82), and a third ring surface (83), and the ring structure (80) has a trapezoidal shape in an axial section through the bevel gear (31), or
- has an edge-free configuration and has a convex shape in an axial section through the bevel gear (31).

3. The bevel gear (31) according to claim 1, **characterized in that**, by way of the circumferential ring structure (80) having the exit angle (δ₁) in a heel-side exit region of the tooth gap (67), an effective heel cone angle (δᵥₑ) is defined, which is less than the heel cone angle (δᵥ) of the heel truncated cone (FK).

4. The bevel gear (31) according to claim 1, **characterized in that** the circumferential ring structure (80) comprises a first ring surface (81), which is part of a truncated cone, which is arranged concentrically in relation to the workpiece axis of rotation (R1), and which has an effective heel cone angle (δᵥₑ) which is less than the heel cone angle (δᵥ).

5. The bevel gear (31) according to any one of the preceding claims, **characterized in that** the heel-side, ring-shaped skin surface (65) is part of a heel truncated cone skin surface of a heel truncated cone (FK).

6. The bevel gear (31) according to claim 5, **characterized in that** the bevel gear (31) comprises, in addition to the heel truncated cone (FK), at least one head truncated cone (KK), which is arranged concentrically in relation to the workpiece axis of rotation (R1), wherein
- the head truncated cone (KK) has a ring-shaped head truncated cone skin surface,
- the head truncated cone (KK) is defined by a head cone angle (δₐ) in relation to the workpiece axis of rotation (R1), which is between 0° and 90°,
- the heel truncated cone (FK) is defined by a heel cone angle (δᵥ) in relation to the workpiece axis of rotation (R1), which is between 0° and 90°.

7. The bevel gear (31) according to claim 5, **characterized in that** the heel truncated cone (FK) is defined by a heel cone angle (δᵥ) in relation to the workpiece axis of rotation (R1), which is between 0° and 90°.

8. A method for producing a bevel gear (31) as claimed in any one of claims 1 to 7, **characterized in that** the method comprises the following steps:
- providing (S1) a bevel gear blank,
- carrying out turning machining (S2) of the bevel gear blank, wherein, in the scope of this turning machining (S2), a circumferential ring structure (80) is formed, which is arranged concentrically in relation to the workpiece axis of rotation (R1) of the bevel gear (31),
- carrying out gear chip producing machining of the bevel gear blank, to form at least one tooth gap (67) on the bevel gear (31).

9. The method according to claim 8, **characterized in that** deburring machining of the bevel gear (31) is carried out, wherein no deburring machining is carried out on the tooth base (68) in the region of the heel-side skin surface (65).

## Revendications

1. Roue conique (31) avec un corps de base (60) comprenant une surface latérale annulaire (65) côté talon qui est agencée de façon concentrique par rapport à un axe de rotation de pièce (R1) de la roue conique (31),
• la roue conique (31) présentant au moins un entredent (67) qui sort du corps de base (60) dans la zone de la surface latérale (65),
• et l'entredent (67) présentant un pied de dent (68) dont le tracé est défini par un angle de cône de pied (δ_{f}) par rapport à l'axe de rotation de pièce (R1),
**caractérisée en ce qu'**il est prévu sur la surface latérale (65) une structure annulaire périphérique (80) s'étendant de façon concentrique qui est surélevée par rapport à la surface latérale (65) et qui fournit un angle de sortie côté talon (δ₁) entre le pied de dent (68) et la structure annulaire (80), qui est compris dans la plage comprise entre 125 degrés et 160 degrés, de préférence dans la plage comprise entre 135 degrés et 150 degrés.

2. Roue conique (31) selon la revendication 1, **caractérisée en ce que** la structure annulaire périphérique (80)
- comprend au moins une première surface annulaire (81) et une deuxième surface annulaire (82) et **en ce que** la structure annulaire (80), dans une coupe axiale à travers la roue conique (31), a la forme d'un triangle, ou
- comprend au moins une première surface annulaire (81), une deuxième surface annulaire (82) et une troisième surface annulaire (83) et **en ce que** la structure annulaire (80), dans une coupe axiale à travers la roue conique (31), a la forme d'un trapèze, ou
- présente une constellation sans arêtes et, dans une coupe axiale à travers la roue conique (31), a une forme convexe.

3. Roue conique (31) selon la revendication 1, **caractérisée en ce que**, à travers la structure annulaire périphérique (80), il est défini avec l'angle de sortie (δ₁) dans une zone de sortie côté talon de l'entredent (67) un angle de cône de talon (δᵥₑ) qui est plus petit que l'angle de cône de talon (δᵥ) du cône tronqué de talon (FK).

4. Roue conique (31) selon la revendication 1, **caractérisée en ce que** la structure annulaire périphérique (80) comprend une première surface annulaire (81) qui fait partie d'un cône tronqué qui est agencé de façon concentrique par rapport à l'axe de rotation de pièce (R1) et qui présente un angle de cône de talon (δᵥₑ) effectif plus petit que l'angle de cône de talon (δᵥ).

5. Roue conique (31) selon l'une des revendications précédentes, **caractérisée en ce que** la surface latérale (65) annulaire côté talon fait partie d'une surface latérale de cône tronqué de talon d'un cône tronqué de talon (FK).

6. Roue conique (31) selon la revendication 5, **caractérisée en ce que** la roue conique (31) comprend, en plus du cône tronqué de talon (FK) au moins un cône tronqué de tête (KK) qui est agencé de façon concentrique par rapport à l'axe de rotation de pièce (R1),
- le cône tronqué de tête (KK) présentant une surface latérale de cône tronqué de tête annulaire,
- le cône tronqué de tête (KK) étant défini par un angle de cône de tête (δₐ) par rapport à l'axe de rotation de pièce (R1) compris entre 0 degré et 90 degrés,
- le cône tronqué de talon (FK) étant défini par un angle de cône de talon (δᵥ) par rapport à l'axe de rotation de pièce (R1) qui est compris entre 0 degré et 90 degrés.

7. Roue conique (31) selon la revendication 5, **caractérisée en ce que** le cône tronqué de talon (FK) est défini par un angle de cône de talon (δᵥ) par rapport à l'axe de rotation de pièce (R1) qui est compris entre 0 degré et 90 degrés.

8. Procédé pour fabriquer une roue conique (31) selon l'une des revendications 1 à 7, **caractérisé en ce que** le procédé comprend les étapes suivantes consistant à :
- fournir (S1) une ébauche de roue conique,
- effectuer un usinage par tournage (S2) de l'ébauche de roue conique, dans le cadre de cet usinage par tournage (S2) une structure annulaire périphérique (80) étant réalisée agencée de façon concentrique par rapport à l'axe de rotation de pièce (R1) de la roue conique (31),
- effectuer un usinage de taille d'engrenage de l'ébauche de roue conique pour réaliser au moins un entredent (67) sur la roue conique (31).

9. Procédé selon la revendication 8, **caractérisé en ce qu'**il est réalisé un usinage par ébavurage de la roue conique (31), aucun usinage par ébavurage n'étant réalisé au niveau du pied de dent (68) dans la zone de la surface latérale côté talon (65).
